# EUROPÄISCHE PATENTSCHRIFT

(11) **EP 0 299 304 B1**
(45) Veröffentlichungstag und Bekanntmachung des Hinweises auf die Patenterteilung: **28.04.1993**
(21) Anmeldenummer: 88110595.1
(22) Anmeldetag: 02.07.1988
(51) Int. Cl.: A61C 13/273

(54) **Dentalprothetische Riegelanordnung**
Locking bar arrangement for a dental prosthesis
Dispositif de verrou pour prothèse dentaire

(30) Priorität: 13.07.1987 DE 8709613 U; 13.07.1987 DE 3723086
(43) Veröffentlichungstag der Anmeldung: 18.01.1989
(73) Patentinhaber: Janevski, Jovan, D-70193 Stuttgart (DE)
(72) Erfinder: Janevski, Jovan, D-70193 Stuttgart (DE)

(56) Entgegenhaltungen:
- EP-A- 0 035 042
- DE-A- 1 566 193
- DE-A- 3 312 908
- DE-A- 3 504 162
- DE-U- 1 979 735

## Beschreibung

### Stand der Technik

Die Erfindung geht aus von einer dentalprothetischen Riegelanordnung nach der Gattung des Hauptanspruchs. Derartige, allgemein im Stand der Technik bekannte, dentalprothetische Riegelanordnungen dienen dazu, den herausnehmbaren Zahnersatz an fest einzementierten Kronen oder Brücken zu verankern. Derartige Riegeleinrichtungen sollten gut zugänglich sein, um das Einsetzen und Herausnehmen der Prothese möglichst einfach vornehmen zu können, und sie sollte außerdem so gestaltet sein, daß auch bei den hohen gegebenen Belastungen eines Gebisses eine ausreichende Lebensdauer erzielbar ist.

Bei den gattungsgemäßen auf dem Kieferkamm anliegenden Zahnprothesen ist am Riegelgehäuse eine Ausnehmung vorhanden, in die in situ eine entsprechende Erhebung des Kronen/Brückengliedes greift. Diese Erhebung bildet in Verbindung mit der Ausnehmung der dadurch gegebenen Patrizen/Matrizenwirkung eine Kopplung gegen Querverschiebung der Zahnprothese. Der meist quer zur eigentlichen Belastungsrichtung oder Auflagerichtung der Zahnprothese verschiebbare Flachriegel bewirkt den Formschluß zwischen Erhebung und Ausnehmung und damit die Verriegelung der Kopplung.

Bei einer bekannten Riegelanordnung der gattungsgemäßen Art (DE-OS 3312908), bei der in üblicher Weise der Flachriegel in die Öffnung von der Riegelaufnahme und dem Riegelgehäuse entweder geschoben oder geschwenkt wird, muß der Flachriegel nahezu gleichzeitig in beide Teile eintauchen, bevor er in seine Endlage verschoben werden kann. Wenn die Stützfläche der Erhebung nicht sehr exakt der Auflagefläche der Ausnehmung entspricht, wird ein Teil der Belastung vom Riegelgehäuse über den Flachriegel auf die Riegelaufnahme übertragen, was zu einer unerwünschten Beanspruchung des Flachriegels führt, und wodurch dieser sich allmählich lockern kann. Hinzu kommt der Nachteil, daß nach Einsetzen der Zahnprothese und vor Beginn des Einschiebens des Flachriegels die Einschuböffnungen von Riegelaufnahme und Riegelgehäuse miteinander fluchten müssen, um überhaupt den Flachriegel in die Öffnungen einsetzen zu können. Durch die leicht keilförmige und dazu federnd nachgiebige Ausbildung der Dicke dieses bekannten Flachriegels sollen einerseits Toleranzen in der Fluchtung ausgeglichen werden und andererseits die Beanspruchung in Kraftrichtung aufgefangen werden. Dies führt allerdings zum Nachteil, daß sich der Flachriegel mit der Zeit verformt, wodurch die Verriegelung gelockert wird.

Bei einer anderen bekannten Riegelanordnung (DE-GM 1979735) wird der Zahnersatz mit eingearbeitetem Riegelgehäuse reiterartig auf die Riegelaufnahme gesteckt, welche mit dem Restgebiss verbunden ist. Der dort verwendete Flachriegel wird nach Aufsetzen der Prothese senkrecht in die entsprechende Öffnung der Riegelaufnahme geschoben. Die die Öffnung enthaltende Wand verläuft dabei in Richtung des Kieferkamms, so daß auch der Riegel quasi horizontal verschiebbar sein muß. Diese Art Riegel hat den Nachteil, daß besonders wegen der dort vorhandenen langen Riegelführung bei nicht exaktem Fluchten der Öffnung der Riegelführung zu der Riegelaufnahme erst durch hin- und herbewegen der Prothese gegenüber der Riegelaufnahme der Riegel eingeschoben werden kann und daß er außerdem weitgehend horizontal angeordnet sein muß. Dieses hat jedoch den Nachteil, daß einerseits die Auflage der Zahnprothese ein gewisses Spiel zur Stützfläche ermöglicht, was sich endgültig als Labilität der Zahnprothese in situ auswirkt und daß andererseits gekippte Zähne oder herausgewachsene Antagonisten nicht mit einer solchen Riegelanordnung an der Zahnprothese versehen werden können, da die Innenraumöffnungen von Riegelaufnahme und Riegelgehäuse und damit die horizontale Einschubrichtung bei dieser bekannten Riegelanordnung durch deren Aufbau unveränderbar festliegt.

### Aufgabe der Erfindung

Der Erfindung liegt die Aufgabe zugrunde, eine dentalprothetische Riegelanordnung der gattungsgemäßen Art zu entwickeln, die bei Vermeidung der Nachteile vom Stand der Technik eine einfache, unkomplizierte Fertigung der Einzelteile ermöglicht, wenig reparaturanfällig ist, insbesondere durch die einfache Gestaltung ein leichtes Auswechseln des Flachriegels ermöglicht und auch bei ausgefallenen Prothesenformen anwendbar ist.

### Vorteile der Erfindung

Die erfindungsgemäße dentalprothetische Riegelanordnung mit den kennzeichnenden Merkmalen des Hauptanspruchs hat gegenüber den bekannten Riegelanordnungen den Vorteil, daß das Einsetzen und Verriegeln der Zahnprothese unkompliziert ist, dies insbesondere bei mehreren nichtparallel angeordneten Riegeln, daß über den Flachriegel nahezu keine Kräfte von der Zahnprothese auf das Restgebiss bzw. den Kieferkamm übertragen werden, und daß die erfindungsgemäße Riegelanordnung aufgrund der einfachen Teile leicht herstellbar und anpaßbar ist, mit entsprechend geringer Reparaturanfälligkeit. Wenn beispeilweise mehrere solche Riegelanordnungen für eine Prothese erforderlich sind, so ist es nicht notwendig, die gleiche Einschubrichtung für die Flachriegel zu haben. Hierdurch kann die Kronen - oder Brückenform den anatomischen oder kosmetischen Gegebenheiten leichter angepaßt werden. Besonders bei gekippten Zähnen oder in der Höhe herausragenden Antagonisten wirkt sich die besonders flache Form der erfindungsgemäßen Vorrichtung vorteilhaft aus. Da keine Parallelität zwischen mehreren erfindungsgemäßen Riegeln vorhanden sein muß , kann die Riegelanordnung dem Kieferkamm besser angepaßt werden, insbesondere bei ungleichmäßigen Kieferkammerhebungen und Senkungen, so daß keine Stellen oder Hohlräume entstehen, in denen sich Speisereste absetzen und zu unangenehmen Mundgeruch führen können. Der Flachriegel kann in üblicher Weise als Schieber ausgebildet sein. Vorteilhafterweise dringt der Flachriegel erst beim letzen Abschnitt seiner Einschubbetätigung in Richtung bucco-labial mit seiner entsprechenden Seite in die Innenraumöffnung der Riegelaufnahme. Es ist zwar eine Riegelanordnung bekannt (DE-OS 1566193), bei der der Schwenkriegel im Innenraum des Riegelgehäuses geführt ist und beim Schwenkvorgang allmählich in den Innenraum der Riegelaufnahme verschoben wird, allerdings mit dem obengenannten Nachteil, daß der Flachriegel zur Stabilität der eingesetzten Zahnprothese beitragen muß, es sei denn, er ist mit entsprechenden Toleranzen versehen. Bei der erfindungsgemäßen Riegelanordnung wird aufgrund der Bewegungsrichtung des Flachriegels beim Verriegeln die gesamte Rückseite des Riegels auf einmal und nunmehr nur in eine Öffnung eingeschoben, so daß eine beim Verschieben sich ergebende Verspannung gar nicht auftreten kann. Zudem verläuft die Trennfuge quer zum Kieferkamm, so daß auch eine starke Abweichung von der Horizontalen möglich. ist. Aufgrund der den Einbau betreffenden flexiblen Gestaltungsmöglichkeit kann auch die Matrizen/Patrizenanordnung vielfältig gestaltbar sein. Sie kann als Kuppe, Kegel, Pyramide, Rille, mit oder ohne Spitze, mit begrenzter Kantenzahl (bezogen auf Kantenzahl der Pyramide/Rille) ausgebildet sein.

Nach einer vorteilhaften Ausgestaltung der Erfindung ist der Flachriegel in seiner Grundrißform in Richtung bucco-labial keilförmig sich verjüngend ausgebildet, wobei die der Rückseite zugeordnete zweite Keilseite zur Führung des Flachriegels an einer in Verschieberichtung verlaufenden Wand des Riegelgehäuse-Innenraums gleitet. Im Unterschied zu der weiter obengenannten bekannten Riegelanordnung (DE-OS 3312908), bei der die Keilform zur besseren Einführung in die Innenraumöffnung und auch zum Spielausgleich dient, ist diese erfindungsgemäße Keilform des Flachriegels um 90° verdreht, also in der Riegelausdehnung vorhanden, die quer zu der Innenraumöffnung der Riegelaufnahme verläuft, in die die dieser zugewandte und hier mit Rückseite bezeichnete Flachriegelseite beim Verriegeln eintaucht. Indem der Flachriegel an der entsprechenden Riegelgehäuse-Innenwand entlanggleitet, wird diese Rückseite parallel zu der dem Riegelgehäuse zugewandten Fläche der Riegelaufnahme verschoben, um dann nahezu auf die gesamte Länge der Rückseite in deren Innenraum einzutauchen.

Nach einer weiteren vorteilhaften Ausgestaltung der Erfindung ist die äußere Form des Riegelgehäuses in Anpassung an die Form des Flachriegels ebenfalls keilartig ausgebildet. Hierdurch ergibt sich Platz für die Zahnverblendung, was eine bessere Farbgebung und Schichtstärke der Zahnfacette ermöglicht und durch die stärkere Schicht die Bruchgefahr der Zahnverblendung vermindert. Gleichzeitig wirkt sich die Platzgewinnung für die notwendige Verblendung im okklusalen Bereich vorteilhaft aus, da in vielen Fällen die Antagonisten des Gegenkiefers in die Lücken hereinwachsen.

Nach einer weiteren vorteilhaften Ausgestaltung der Erfindung ist am Flachriegel eine in Verschieberichtung verlaufende Leiste angeordnet, die in eine im Innenraum des Riegelgehäuses vorhandene Nut greift. Zwar ist eine am Riegel angeordnete Führungsleiste an einer Riegelanordnung bekannt (DE-OS 1566193), mit dem Unterschied, daß es sich dort um einen Schwenkriegel handelt und die Leiste in einer im Innenraum der Riegelaufnahme vorgesehenen Nut gleitet. Die Leiste übernimmt dort eine Art Verkettungsglied, da die Schwenkachse im Riegelgehäuse gelagert ist. Abgesehen davon, daß es sich dort um eine sehr aufwendige Anordnung handelt, ist die Funktion eine völlig andere wie bei der Ausgestaltung der Erfindung.

Nach einer weiteren vorteilhaften Ausgestaltung der Erfindung ist die Leiste bündig mit der zweiten Keilseite des Flachriegels. Dadurch entsteht ein L-förmiger Querschnitt des Flachriegels mit der Möglichkeit, das durch das L eingefaßte Materialvolumen des Riegelgehäuses für eine Einrasteinrichtung oder Fixiereinrichtung zu verwenden. Der Flachriegel ist dabei mit einer Schenkelblattführung wie ein flacher, normalerweise horizontal verschiebbarer Keil ausgebildet, der von palatinal bzw. lingual in Richtung bucco-labial verschiebbar ist. Der kleinere Schenkel dieses L als Leiste verläuft in dem Fall vertikal und wird auf beiden Seiten durch die einander gegenüberliegenden Wände der Nut geführt.

Gemäß der Erfindung ist zwischen dem Flachriegel und der Wand des Innenraums des Riegelgehäuses eine Einrasteinrichtung vorhanden, die ein federndes Element aufweist, so daß der Flachschieber in situ- Stellung einrastbar ist. Hierdurch wird vermieden, daß sich nach Einsetzen und Verriegeln der Zahnprothese diese sich selbständig wieder löst.

Nach einer weiteren Ausgestaltung der Erfindung weist die Einrasteinrichtung eine Einstellschraube auf, durch die die Vorspannung des federnden Elementes änderbar ist. Natürlich kann das federnde Element in der Nut angeordnet sein, in der die Leiste geführ- ist, oder es kann an einer anderen Stelle der sich gegenüberliegenden Flächen von Flachriegel und Riegelgehäuse-Innenraum angeordnet sein. In jedem Fall aber ist die Einstellschraube quer zur Verstellrichtung des Flachriegels verdrehbar, also quer zu einer der einander gegenüberliegenden Flächen der beiden Teile.

Nach einer weiteren Ausgestaltung der Erfindung läuft in einer quer zur Verschieberichtung des Flachriegels im Riegelgehäuse vorhandenen und in den Innenraum mündenden Gewindebohrung eine Schraube, die mit dem Flachriegel zusammenwirkt. Diese Schraube kann identisch sein mit der Einstellschraube. Der Flachriegel kann eine Ausnehmung Aufweisen, in die oder durch die die Einstellschraube ragt, um dadurch ein Herausfallen des Flachriegels aus dem Innenraum des Riegelgehäuses zu unterbinden. Diese Schraube kann also auch senkrecht angeordnet sein, so daß ihr Kopf von der Ausnehmung der Kopplung her zugänglich ist, die wiederum durch die Erhebung verschlossen ist, vorteilhafterweise kann der Schraubenkopf (32) als Kopplung benutzt werden.

Weitere Vorteile und vorteilhafte Ausgestaltungen der Erfindung sind der nachfolgenden Beschreibung, der Zeichnung und den Ansprüchen entnehmbar.

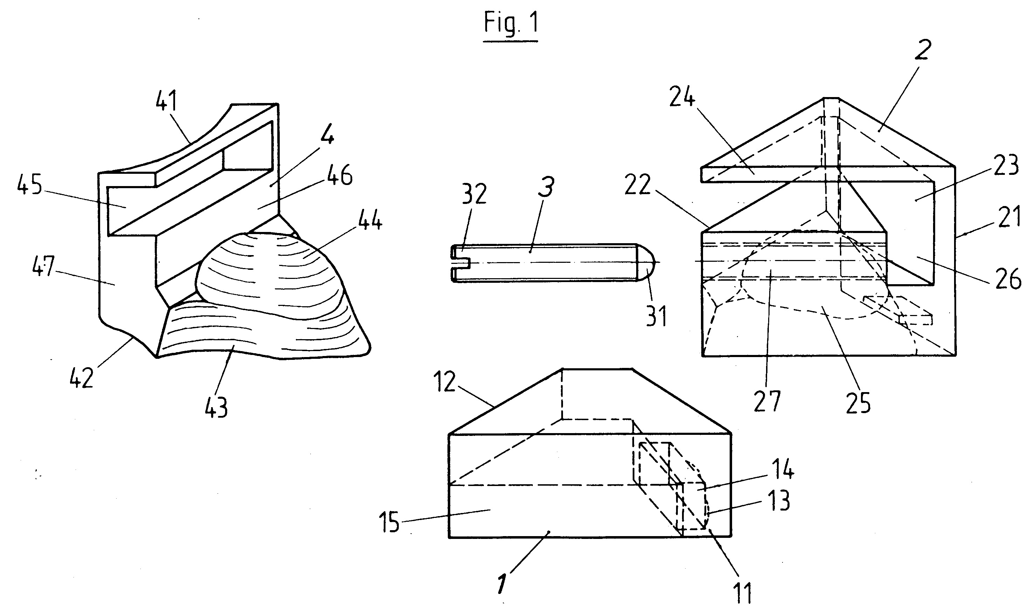

Ein Ausführungsbeispiel der Erfindung ist in der Fig. 1 als Explosionsdarstellung gezeigt.

### Beschreibung des Ausführungsbeispiels

In der Explosionsdarstellung der erfindungsgemäßen Riegelanordnung ist mit 1 ein Flachriegel, mit 2 ein Riegelgehäuse, mit 3 eine Festspannschraube und mit 4 eine Riegelaufnahme bezeichnet.

Die Riegelaufnahme 4 ist an einem an die Rundung 41 anschließenden, nicht dargestellten Kronenstumpf- oder Kronenbrückenglied befestigt, also Teilen, die als Restgebiss bezeichnet werden können. An der Unterseite der Riegelaufnahme 4 ist eine schräge Aussparung 42 für die Zahnfleischpapille vorhanden. Außerdem ist an der Riegelaufnahme 4 eine Vorsprungnase 43 angeordnet mit einer kuppenförmigen Erhebung 44. In der Riegelaufnahme 4 ist ein Innenraum 45 vorgesehen, in dem der Flachriegel 1 in eingeschobenem Zustand eingreift. Für die weitere Beschreibung ist die dem Riegelgehäuse 2 zugewandte Seite der Riegelaufnahme 4 mit 46 bezeichnet, hingegen die dazu etwa rechtwinklig angeordnete Seite, zu der hin der Innenraum 45 ebenfalls offen ist, mit 47.

Am Riegelgehäuse 2 ist auf der Seite 21 die Zahnprothese befestigt, was nicht näher dargestellt ist. Eine zweite Seite 22 liegt der Seite 46 der Riegelaufnahme 4 parallel gegenüber. Zur Aufnahme des Flachriegels 1 ist ein Innenraum 23 im Riegelgehäuse 2 vorgesehen, der zur Vorderseite 24 hin eine L-förmige Öffnung, hingegen zur Seite 22 eine schlitzförmige Öffnung aufweist, die der Öffnung zum Innenraum 45 hin in der Riegelaufnahme 4 entspricht. Unten ist in dem Riegelgehäuse 2 eine Ausnehmung 25 vorgesehen, deren Abmaße der Erhebung 44 der Riegelaufnahme 4 entsprechen. Beim Einsetzen der Zahnprothese wird diese Ausnehmung 25 auf die Erhebung 44 gesetzt, wobei die Vorsprungnase 43 mit der Erhebung 44 die Stütz- und Verankerungsfläche für die Zahnprothese bildet.

In den Innenraum 23 des Riegelgehäuses 2 ist von der Vorderseite 24 her der keilförmig ausgebildete Flachriegel 1 einschiebbar, wobei eine an ihn angeordnetete Führungsleiste 11 in einer Nut 26 geführt wird, so daß beim Hereinschieben des Flachriegels 1 dieser in Richtung der Nut 26 im Innenraum 23 verschoben wird, bis bei eingesetzter Zahnprothese die Rückseite 12 des Flachriegels 1 in den Innenraum 45 der Riegelaufnahme 4 dringt.

Um ein sich selbständiges Lösen des Flachriegels zu vermeiden, ist eine Einrasteinrichtung vorgesehen, für die in der Führungsleiste 11 des Flachriegels 1 eine Blattfeder 13 in einer entsprechenden Ausnehmung angeordnet ist,die gegen die gegenüberliegende Wand des Innenraums 23 des Riegelgehäuses 2 drückt.
In diese Ausnehmung und auf die Blattfeder 13 wirkt die in einem nur gestrichelt dargestellten Gewinde 27 laufende Madenschraube 3. Da die Kuppe 31 der Madenschraube 3 in die Ausnehmung 14 des Flachriegels 1 greift, wird ein Herausfallen des Flachriegels 1 aus dem Innenraum 23 des Riegelgehäuses 2 unterbunden. Je nachdem wie stark die Madenschraube 3 hereingeschraubt ist, umso stärker ist die Blattfeder 13 vorgespannt. Bei weiterem Hereinschrauben der Madenschraube 3 kann die Kraft der Blattfeder 13 gesteigert werden, und es kann durch die Madenschraube 3 dadurch die Verschiebung des Flachriegels 1 im Riegelgehäuse 2 leichter oder schwergängiger eingestellt werden, bevor der herausnehmbare Zahnersatz eingesetzt wird. Die Zahnprothese wird eingesetzt, indem die Ausnehmung 25 auf die Erhebung 44 gesetzt wird,wonach die beiden Flächen 46 und 22 aneinanderliegen.
Bei ordentlichem Sitz liegen die einander zugewandten Öffnungen der Innenräume 45 und 23 freibleibend voreinander.Der Flachriegel 1 wird dann mit seiner Führungsleiste 11 in der Nut 26 bzw. im Innenraum 23 verschoben, bis er mit seiner Rückseite 12 in den Innenraum 45 gelangt. Um den Flachriegel 1 wieder herausnehmen zu können, ist an seiner Vorderseite unten ein Lappen 15 angeordnet.

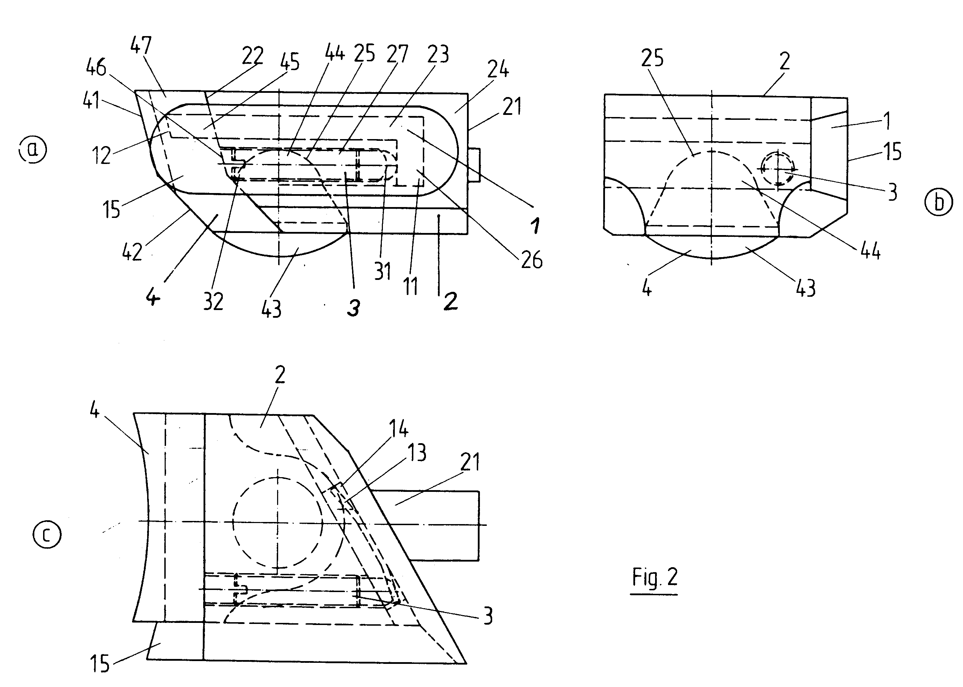

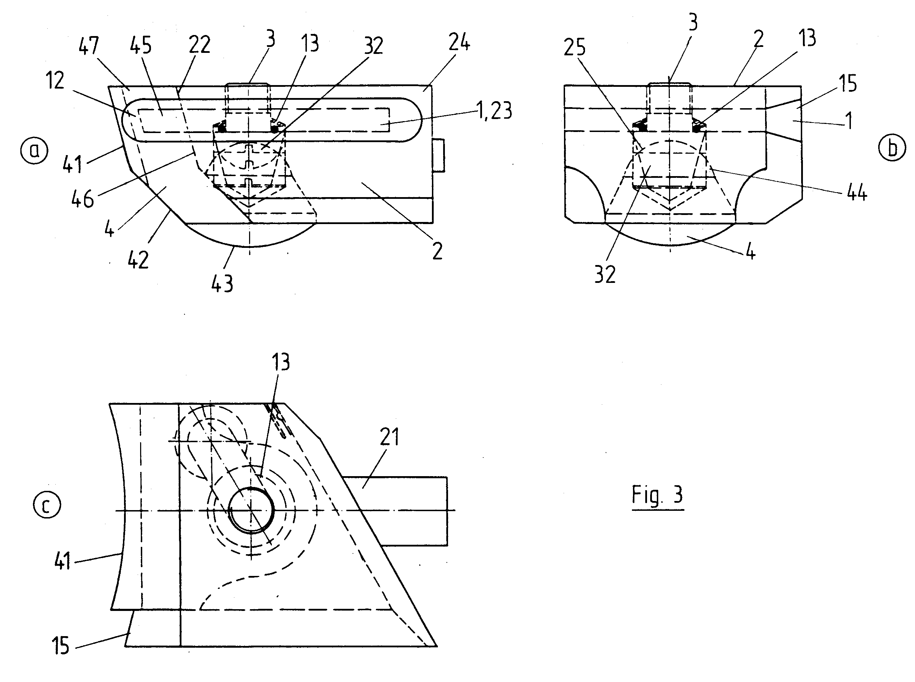

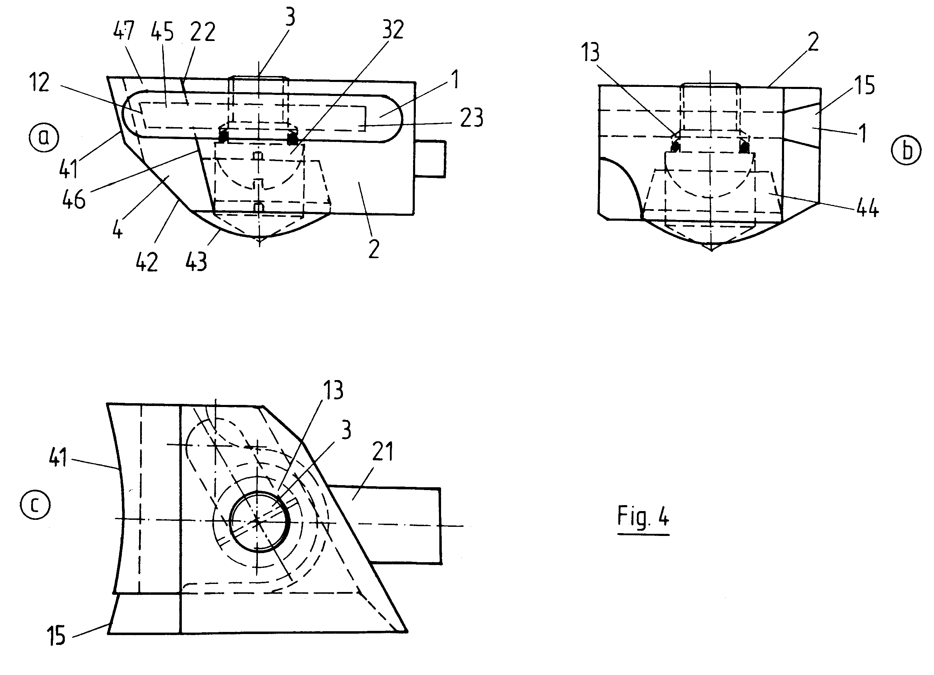

### Technische Zeichnungen Fig. 2 - 4.

- a: Vorderansicht
- b: Seitenansicht
- c: Draufsicht

Fig. 2 mit der Zeichnung a Vorderansicht, b Seitenansicht, c Draufsicht entspricht Fig. 1 nur als technische Zeichnung dargestellt.

Fig. 3 und Fig. 4 entsprechen der Beschreibung von Fig. 1 und Fig. 2 , nur daß in der technischen Zeichnung die Schraube (3) senkrecht angeordnet ist und gleichzeitig mit ihrem Kopf (32), der verschiedene Formen aufweisen kann, als Kopplung zwischen Matrize und Patrize dienen kann.

Bei senkrechter Schraubenanordnung kann die Leiste (11) entfallen.

### Bezugszahlenliste

- 1: Flachriegel
- 2: Riegelgehäuse
- 3: Madenschraube
- 4: Riegelaufnahme
- 11: Führungsleiste
- 12: Rückseite
- 13: Blattfeder/Einrasteinrichtung
- 14: Ausnehmung
- 15: Lappen
- 21: Seite
- 22: Seite
- 23: Innenraum
- 24: Vorderseite
- 25: Ausnehmung
- 26: Nut
- 27: Gewinde
- 31: Kuppe
- 32: Schraubenkopf
- 41: Rundung
- 42: schräge Aussparung
- 43: Vorsprungnase
- 44: Erhebung
- 45: Innenraum
- 46: Seite
- 47: Vorderseite

## Patentansprüche

1. Dentalprothetische Riegelanordnung mit einem zahnprothesenseitig zugeordneten Riegelgehäuse (2) und einer am Restgebiss bleibend festlegberen und in situ mit seinem Innenraum der Riegelgehäuseöffnung gegenüberliegenden Riegelaufnahme (4), mit einem in der Dicke den Öffnungen von Riegelgehäuse und Riegelaufnahme entsprechenden und in situ etwa quer zur Kieferkammrichtung verschiebbaren keilförmigen Flachriegel (1), mit einer Führung für den Flachriegel im Riegelgehäuse und mit einer als Kopplung gegen Querverschiebung der Zahnprothese dienenden Erhebung bzw. Ausnehmung (44) aus einem mit der Riegelaufnahme verbundenen Teil (Kronen oder Brückenglied), die in eine entsprechende ihr zugewandte Ausnehmung bzw. Erhebung am Riegelgehäuse greift, dadurch gekennzeichnet, daß in situ die beiden einander zugewandten Seiten (22, 46) des Riegelgehäuses (2) und der Riegelaufnahme (4) mindestens im Bereich der korrespondierenden Öffnungen der Innenräume (23, 45) weitgehend einander parallel und nahe sind sowie quer zum Kieferkamm verlaufen,
daß die Führung (26) im Innenraum (23) des Riegelgehäuses (2) die Verschieberichtung des Flachriegels (1) in Richtung bucco-labial sowie in Richtung sagittal zur Riegelaufnahme (4) bestimmt,
daß die der Riegelaufnahme (4) zugewandte Stirnseite (12) (Rückseite) des Flachriegels (1) bei Eintritt in die Öffnung der Riegelaufnahme weitgehend parallel zu der ihr zugewandten Seite (46) der Riegelaufnahme (4) verlauft, und daß zwischen dem Flachriegel (1) und seiner Führung im Innenraum (23) eine Einrasteinrichtung (3, 13, 14) vorhanden ist, so daß der Flachriegel (1) mindestens in Verriegelungsstellung einrastbar ist.

2. Riegelanordnugn nach Anspruch 1, dadurch gekennzeichnet, daß der Flachriegel (1) in seiner Grundrißform in Richtung bucco-Labial keilförmig sich verjüngend ausgebildet ist, und daß die der Rückseite (12) zugeordnete zweite Keilseite zur Führung des Flachriegels (1) an einer in Verschieberichtung verlaufenden Wand des Riegelgehäuse-Innenraums (23) geführt gleitet.

3. Riegelanordnung nach Anspruch 2, dadurch gekennzeichnet, daß die äußere Form des Riegelgehäuses (2) in Anpassung an die Form des Flachriegels (1) ebenfalls keilartig ausgebildet ist.

4. Riegelanordnung nach Anspruch 2 oder 3, dadurch gekennzeichnet, daß am Flachriegel (1) eine in Verschieberichtung verlaufende Leiste (11) angeordnet ist, die in eine im Innenraum (23) des Riegelgehäuses (2) vorhandene Nut (26) greift.

5. Riegelanordnung nach Anspruch 4, dadurch gekennzeichnet, daß die Leiste (11) bündig mit der zweiten Keilseite des Flachriegels (1) ist.

6. Riegelanordnung nach Anspruch 5, dadurch gekennzeichnet, daß die Einrasteinrichtung (3, 14) mit einem federnden Element (13) ausgestattet ist.

7. Riegelanordnung nach Anspruch 5 oder 6, dadurch gekennzeichnet, daß die Einrasteinrichtung eine Einstellschraube (3) aufweist,durch die die Vorspannung des federnden Elementes (13) änderbar ist, wobei die Spitze (31) der Schraube in eine Ausnehmung (14) des Flachriegels (1) greift.

8. Riegelanordnung nach einem der Ansprüche 1-3 oder 6, durch gekennzeichnet, daß in einer quer zur Verschieberichtung des Flachriegels (1) im Riegelgehäuse (2) vorhandenen und in den Innenraum (23) mündenden Gewindebohrung eine Schraube (3) läuft, die mit dem Flachriegel (1) zusammenwirkt.

9. Riegelanordnung nach Anspruch 8, dadurch gekennzeichnet,daß die Schraube (3) bei senkrechter Anordnung mit dem Schraubenkopf (32) als Kopplung zwischen Matrize und Patrize zusammenwirkt.

## Claims

1. Dental prothetics bolt arrangement with a bolt case (2) assigned to the side of partial dentures and a bolt guide (4) which can be permanently attached at the remaining dentition, the interior of which bolt guide being opposite in situ to the opening of the bolt case, with a wedge-shaped flat bolt (1) the thickness of which corresponds to the opening of bolt case and bolt guide and which is adjustable in situ approximately at right angles to the direction of the maxillary crest, with a guide for the flat bolt in the bolt case and with an elevation respectively cut-out from a part connected to the bolt guide (crown or bridge element) serving as a coupling against cross displacement, this elevation or cut-out gripping into the corresponding facing elevation or cut-out in the bolt case characterized in that in situ both the facing sides (22, 46) of the bolt case (2) and the bolt guide (4) are largely parallel and near to each other as well as running at right angles to the maxillary crest, at least in the area of the corresponding openings of the interiors (23, 45),
the guide (26) in the interior (23) of the bolt case (2) determining the direction of adjustment of the flat bolt (1) either in bucco-labial direction or in sagittal direction to the bolt guide (4),
the face (12) (back) facing the bolt guide (4) of the flat bolt (1) on entry into the opening of the bolt guide running largely parallel to the bolt guide's (4) side (46) facing said bolt guide, and an engagement means (3, 13, 14) being present between flat bolt (1) and its guide in the interior (23), it thus being possible to engage the flat bolt (1) at least in bolting position.

2. Bolt arrangement as claimed in claim 1, characterized in that the flat bolt (1) in its layout is formed to taper off wedged-shaped in bucco-labial direction, and in that the second side of the wedge assigned to the back (12) passes in a guide at a wall of the interior of the bolt case running in the direction of adjustment in order to guide the flat bolt (1).

3. Bolt arrangement as claimed in claim 2, characterized in that the external form of the bolt case (2), being adapted to the form of the flat bolt, is likewise shaped like a wedge.

4. Bolt arrangement as claimed in claim 2 or 3, characterized in that a gib (11) running in the direction of adjustment is arranged at the flat bolt, the said gib gripping into a groove (26) in the interior (23) of the bolt case (2).

5. Bolt arrangement as claimed in claim 4, characterized in that the gib (11) is flush with the second wedge side of the flat bolt (1).

6. Bolt arrangement as claimed in claim 5, characterized in that the engagement means (3, 14) is equipped with a resilient element (13).

7. Bolt arrangement as claimed in claim 5 or 6, characterized in that the engagement means has a setscrew (3) by which the prestress of the resilient element (13) can be changed in which process the point (31) of the screw grips into a cut-out (14) of the flat bolt (1).

8. Bolt arrangement as claimed in one of the claims 1 to 3 or 6, characterized in that a screw (3) runs within the threaded hole existing within the bolt case (2) and running at right angles to the direction of adjustment of the flat bolt (1) and ending in the interior (23), said bolt being concurrent with the flat bolt (1).

9. Bolt arrangement as claimed in claim 8, characterized in that the screw (3) being arranged vertically concurs with the screw head (32) as coupling between lower die and counter die.

## Revendications

1. Arrangement de la fermeture au dentier avec un corps de fermeture (2) aux côtés du dentier et un pendant (4) pouvant être fixé au dentier restant et étant in situ opposé, avec son intérieur à l'ouverture du corps de fermeture (4), avec une fermeture plate et cunéiforme (1) et correspondant, en ce qui concerne l'épaisseur, aux ouvertures du corps de fermeture et du pendant, avec un pendant dans le corps de fermeture (1) pour la fermeture plate et une élévation ou un creusement (44) servant comme accouplement contre un déplacement transversal du dentier et composée d'une partie (couronnes ou membre du pont dentaire) connectée au pendant et pouvant être déplacé en situ transversalement à l'arrangement maxillaire. Cette partie s'adapte à un creusement ou une élevation correspondants et dressés vers lui, caractérisée par le fait que les deux côtés, l'un dressé vers l'autre (22,46) du corps de fermeture (2) et du pendant (4) sont, in situ, du moins dans le domaine des ouvertures correspondantes des intérieurs (23,45), le plus que possible parallèles et proches l'un à l'autre en se placant transversalement à l'arrangement maxillaire,
que l'arrangement (26) à l'intérieur (23) du corps de fermeture (2) définit la direction du déplacement de la fermeture plate (1) dans la direction buccolabiale et sagittale au pendant (4),
que la face de devant (2), (face arrière) de la fermeture plate (1), dressée vers le pendant (4), en entrant dans l'ouverture du pendant, soit le plus que possible parallèle à la face (46) dressée vers lui du pendant (4) et qu'entre la fermeture plate (1) et sa position à l'intérieur existe un dispositif d'encliquetage (3,15,14) , afin que la fermeture plate (1) puisse du moins encliqueter en position de fermeture.

2. Arrangement de la fermeture selon la revendication 1, caractérisé par le fait que la fermeture plate (1), dans sa vue en plan, soit formé d'une manière cunéiforme et conique dans la direction buccolabiale et que le 2^{e} côté de la clavette dressée vers la face arrière (12), afin d'adopter la fermeture plate (1), glisse le long d'un mur à l'intérieur du corps de fermeture (23) allant au sens du déplacement.

3. Arrangement de la fermeture selon la revendication 2, caracterisé par le fait que la forme extérieure du corps de fermeture (2) soit également cunéiforme en s'adaptant à la forme de la fermeture plate (1)

4. Arrangement de la fermeture selon les revendications 2 ou 3, caractérisé par le fait qu'une barre allant au sens du déplacement (11) soit fixée à la fermeture plate et qui prend dans une rainure (26) à l'intérieur (23) du corps de la fermeture.

5. Arrangement de la fermeture selon la revendication 4, caracterisé par le fait que la barre (11) ait le même niveau que le 2^{e} côté de la clavette de la fermeture plate (1).

6. Arrangement de la fermeture selon la revendication 5, caractérisé par le fait que le dispositif d'encliquetage (3,14) soit pourvu d'un élément à ressorts (13).

7. Arrangement de la fermeture selon les revendications 5 ou 6, caractérisé par le fait que le dispositif d'encliquetage (3,14) soit pourvu d'une vis d'ajustage (39) pouvant changer la précharge de l'élément à ressorts (13), la tête (31) de la vis en prenant dans un pendant (14) de la fermeture plate.

8. Arrangement de la fermeture selon l'une des revendications 1 à 3 ou 6, caractérisé par le fait qu'une vis (3) concours à un taraudage se situant transversalement au sens du déplacement de la fermeture plate (1) dans le corps de la fermeture (2) et prenant fin à l'intérieur.

9. Arrangement de la fermeture selon la revendication 8, caractérisé par le fait que la vis (3), accompagnée d'un arrangement vertical, concours avec la tête de la vis (32) en tant qu'accouplement entre la matrice et son pendant.
